Europäisches Patentamt

European Patent Office

Office européen des brevets

(11) Publication number: 0 397 302
A2

# (12) EUROPEAN PATENT APPLICATION

(21) Application number: 90302550.0

(51) Int. Cl.⁵: G06F 13/42, G06F 13/362

(22) Date of filing: 09.03.90

(30) Priority: 12.05.89 US 351185

(43) Date of publication of application:
14.11.90 Bulletin 90/46

(84) Designated Contracting States:
DE FR GB

(71) Applicant: FLAVORS TECHNOLOGY INC.,
10 Northern Boulevard
Amherst, New Hampshire 03031(US)

(72) Inventor: Morley, Richard E.
Rd. Box 294, Wilton Road
Mason, New Hampshire 03048(US)
Inventor: Currie Douglas H., Jr.
356 Winding Pond Road
Londonderry, New Hamspshire 03053(US)
Inventor: Szakacs, Gabor L.
219 Coburn Woods
Nashua, New Hamspshire 03063(US)

(74) Representative: Williams, John Francis et al
J.F. Williams & Co 34 Tavistock Street
London WC2E 7PB(GB)

(54) Synchronous bus.

(57) A high-speed synchronous bus is provided for a computer system that allows efficient communication among a plurality of processors or other data devices coupled to the bus.

The bus provides systematic bus access, without arbitration, to data devices connected to the bus, and employs a central bus grant scheme for pre-allocated access to the bus by each data device. Data devices cannot seize or hold the bus. Means are provided for insuring that the bus is always in a read or write mode for a time which is long relative to the cycle time of the bus. Bus timing includes, for each bus frame, a number of time slots allocated to respective data devices. During a bus frame, access to memory is synchronized.

According to another aspect of the invention, two clock signals are propagated in opposing directions on the bus to control similarly traveling data signals. Also included are means for achieving a fast bus cycle time, typically in the range of 20 - 60 nanoseconds per cycle, which is less than the cycle time of the computer system. A backplane is provided of a length which can be driven reliably at the cycle time of the bus, and which is modularly expandable

FIG.1A

## SYNCHRONOUS BUS

This invention relates to synchronous buses for computer systems, and in particular to a high-speed synchronous bus adapted for use with real-time multiprocessing computer systems.

BACKGROUND OF THE INVENTION

Computer buses may be classified as synchronous or asynchronous. There are several classes of asynchronous buses, including: full asynchronous, wherein data transfer timing, data and command signals are not centrally synchronized; partial asynchronous, wherein the clock signal is centrally generated, but data and command signals are not; and "token" based systems, wherein command and control of the bus is determined by the possession of a token. In cases where the transfer timing is not centrally synchronized, each initiating device generates the bus transfer timing while it is in control of the bus using a clock that is local to the device. The timing of data transfer can also be controlled in part by the accessed device using an interlocked handshake. This scheme works well when one processor controls the bus for many data cycles because the clock signals are generated at the same point on the bus as the data, address, and control signals. Consequently, all these signals reach their destination with a known phase relationship that does not depend on the physical position of each board on the bus. An asynchronous scheme does not work well in systems which tend to interleave transfers among many processors, due to problems with unknown phase relationships.

Synchronous buses employ a central clock signal generator which times all data transfer operations. Using a synchronous bus makes it possible to approach optimum data transfer rates, while minimizing associated overhead. Synchronous buses allow "split transaction" operations that interleave two or more data transfers. In a split transaction system, the initiating processor will use one bus cycle to request a transfer to or from a responding processor. The responding processor will use a later cycle to return data and/or transfer completion status to the initiating processor. Between the request and return cycles, the bus may be used by other processors to perform other transfers. In this mode of operation a transfer uses no more than two bus cycles, not necessarily consecutively, regardless of the access time of the responding processor.

Synchronous buses are generally limited in performance by the maximum clock rate supported by the bus. This rate is determined by worst-case conditions in transfer timing. Asynchronous buses do not employ a clock, and instead are limited in overall performance only by the efficiency of the modules that plug into them.

One of the key factors in determining the maximum clock rate of a synchronous bus is the bus propagation delay. In a typical bus with a clock distribution scheme in which each module receives the clock signal at the same time, the worst- case propagation delay, or a multiple thereof, must be added to any component delays when calculating the minimum clock cycle time. Thus, regardless of the quickness of the system components, the ultimate limitations on bus transfer rates are the spatial and electrical properties of the bus backplane.

Large multiprocessing systems have a mix of performance requirements not presently available in any standard system bus. The bus requires very high performance due to the large number of processors accessing it. For example, the bus must be able to switch efficiently between many processors, yet minimize switching overhead. The bus must also be long enough to accommodate the insertion of enough modules to support large-scale parallelism, without reducing the maximum clock rate supported by the bus.

SUMMARY OF THE INVENTION

A high-speed synchronous bus is provided for a computer system that allows efficient communication among a plurality of processors or other data devices coupled to the bus.

The bus provides systematic bus access, without arbitration, to data devices connected to the bus, and employs a central bus grant scheme for pre-allocated access to the bus by each data device. Data devices cannot seize or hold the bus. Means are provided for insuring that the bus is always in a read or write mode for a time which is long relative to the cycle time of the bus. Bus timing includes, for each bus frame, a number of time slots allocated to respective data devices. During a bus frame, access to memory is synchronized.

According to another aspect of the invention, two clock signals are propagated in opposing directions on the bus to control similarly traveling data signals. Also included are means for achieving a fast bus cycle time, typically in the range of 20 - 60 nanoseconds per cycle, which is less than the cycle time of the computer system. A backplane is provided of a length which can be driven reliably at the cycle time of the bus, and which is modularly expandable.

In a preferred embodiment, a first clock signal is reflected at an end of the bus to produce a second clock signal in a known phase relationship with the first clock signal, resulting in two signals traveling in opposing directions. The two oppositely traveling clock signals control similarly traveling data signals. Each memory board communicates with the bus at full bandwidth. Each processor uses only a portion of the bandwidth. All the processors taken together utilize the entire bus bandwidth.

In the preferred embodiment, the bus allocator includes bus control signal drivers in communicating relationship with the bus, adapted to provide signals to the bus; grant list hardware adapted to generate bus grants in a particular order, in cooperation with the bus control signal drivers; means for generating bus timing signals, in communicating relationship with the bus grant list hardware and the bus control signal drivers; and means for generating a clock signal, in communicating relationship with the bus timing generator. The bus grant list hardware grants memory access sequencing so that each of the processors obtains access to successive memory banks on successive bus accesses.

The bus of the invention eliminates system arbitration and includes a reduced number of bus lines with respect to a request-driven, randomly interleaved synchronous bus. The bus of the invention is able to run at data rates comparable to those of an asynchronous bus, while enjoying the arbitration switching rate of a synchronous bus.

The bus of the invention provides the very high performance required by the large number of processors accessing it, i.e., it can switch efficiently between many processors, while minimizing switching overhead. The bus is long enough to accommodate the insertion of enough modules to support large-scale parallelism, without slowing down the bus.

Both the bus and the memory are used most of the time. Memory refreshes are executed at a rate that results in high reliability and low power consumption. The bus of the invention allows boards to be engaged and disengaged without requiring a system power-down, and allows software controllable synchronization of the bus cycle with an A/C power source, or video raster timing generator.


## DESCRIPTION OF THE DRAWINGS


The invention will be more fully understood by reading the following detailed description, supported by the accompanying drawings, in which:

Fig. 1A is a block diagram of a multiprocessor computer system including the bus of the invention;

Fig. 1B is a schematic diagram of the various lines included in the wide high-speed global bus of the invention;

Fig. 2 is a block diagram of the bus allocation (BOSS) board of Fig. 1;

Fig. 3 is a block diagram of the global bus grant list hardware;

Figs. 4A through 4H are timing diagrams that illustrate operations of the system;

Fig. 5 is a timing diagram illustrating read and write timing;

Fig. 6 is a diagram of signal line access timing; and

Fig. 7 is a schematic diagram illustrating the direct mounting of electronic components on the backplane of the bus.


## DETAILED DESCRIPTION OF THE INVENTION


A glossary of selected terms is set forth at the end of the detailed description.

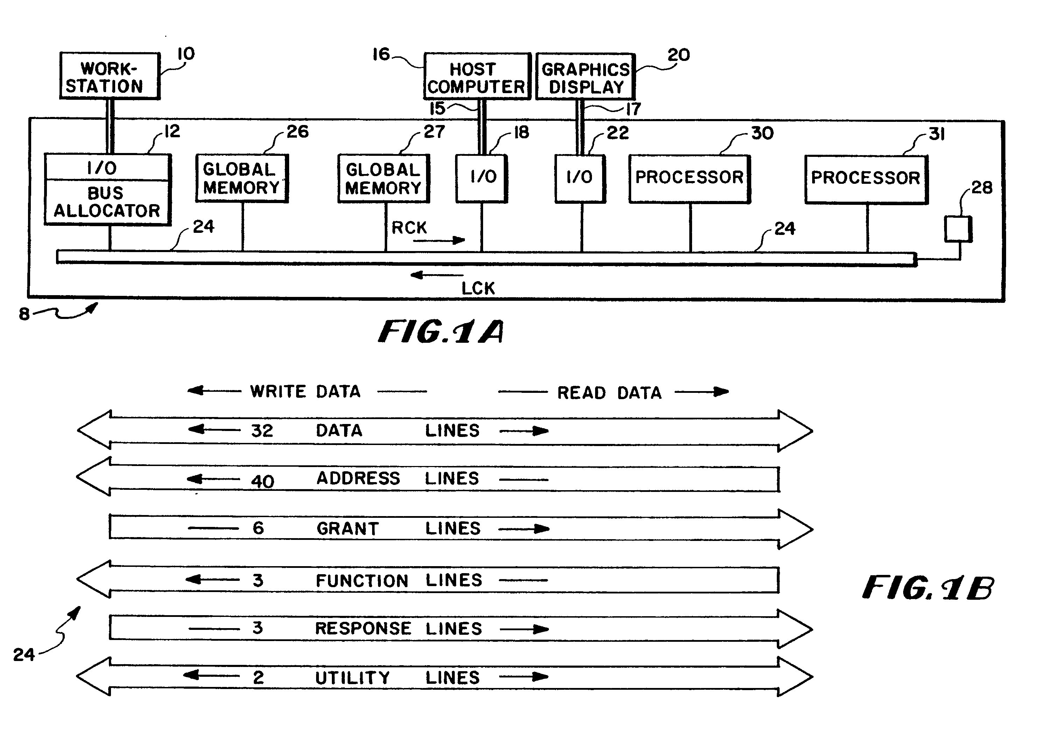

With reference to Fig. 1A, a representative computer system 8 including the bus of the present invention is shown.

The computer system 8 comprises a combination of input/output (I/O) boards 18 and 22, global memory boards 26 and 27, processor boards 30 and 31, and a combination I/O and global bus allocation (BOSS) board 12, each attached to a high-speed global bus 24. The bus allocation portion of the BOSS board 12 and the high-speed global bus 24 taken together are referred to as the bus of the invention. The system 8 also typically includes a work station 10, a host computer 16, and a high resolution graphics display 20. Additional memory, I/O and processor boards may be included in a particular system, and more than one host computer and more than one graphics display may be connected to the system.

In a preferred embodiment, there are a maximum of forty slots on a global bus 24, each slot accepting one board. For identification purposes, each board has an ID PROM which is readable by the BOSS board 12 using separate backplane wires. Each global memory board, or other board that looks like memory to the bus (such as an I/O board), is addressed according to the slot it is plugged into. Alternatively, the address may be changed at run-time as needed. Ideally, slot space is allocated to each board in a NuBus-like manner, (i.e., backplane wiring encodes the physical slot number so that when a board is plugged in, the board's location is known to the backplane and to the other boards) leaving the bulk of the address space open for reassignment.

The computer system 8 includes a number of independent user processors located on processor boards 30 and 31. Each board 30 and 31 may contain several processors, and are preferably based on standard microprocessor chips such as the Motorola 68030 or the Motorola 88000. Each processor preferably has 4 megabytes of local memory. The illustrated system 8 can have up to 128 processors, mounted four to a processor board, although it is not limited to this number.

The bus 24 is made available to each of the multiprocessor boards 30, 31 in the system by using a rotating grant scheme. According to the invention, there are no bus requests, only bus grants. A bus grant is allocated to each board in turn on each clock cycle. Thus, in an embodiment including 128 processors, each multiprocessor board is granted a cycle every 1.28 microseconds (32 clock cycles, where each clock cycle is approximately 40 nanoseconds). Using a fixed bus allocation scheme eliminates bus arbitration overhead, and provides predictable bus access latency and predictable throughput.

The sequence in which the processors obtain access to the bus 24 is stored in high speed RAM on the BOSS board 12. When a multiprocessor board obtains access, it can execute a read or write cycle as determined by the bus allocator on the BOSS board 12. Because the BOSS 12 determines the type of each transfer, the bus 24 is guaranteed to be performing only blocks of reads or blocks of writes at any one time. Thus, only a single data bus is necessary (32 lines) to operate at full capacity (one transfer per clock cycle) during each write burst and each read burst. Read/write transitions occur on a time scale large with respect to one clock cycle. In this embodiment, a delay of 8 clock cycles is required before switching between read and write modes.

A frame is a period during which every processor is allowed to access memory. Each frame includes a read phase, a read/write transition phase, and a write phase. The BOSS regulates the cycle of read/write transitions, which is synchronized to a frame period of approximately 16 milliseconds.

There is a dead-time between frames during which the bus is kept idle to accommodate changes in the direction of data flow, and in some embodiments, to allow synchronization to external devices. It is possible to control the amount of dead time via software. For example, in graphics applications, it is advantageous to synchronize the frame rate to a video raster signal. For applications involving stepper motors, as in machine control, it is useful to synchronize with the 60 cycle alternating current source. If the frame rate is not synchronized to an external device, the minimum dead-time in this embodiment is 8 clock cycles.

The main database for the computer system 8 resides in global memory located on the global memory boards 26 and 27. In the present embodiment, the global memory is arranged in units of 32 megabytes per global memory board. Each global memory board is divided into eight memory banks, wherein each memory bank includes multiple memory chips. The bus cycles at 40 nanoseconds, and the chips cycle more slowly at 200 nanoseconds, so the memory banks are accessed in sequence, but no more often than once every eight bus cycles, or every 320 nanoseconds. This process, referred to as eight-way interleaving, gives the memory chips time to return to equilibrium. Eight-way interleaving also permits a memory cycle to start on each bus cycle. The additional 120 nanoseconds provides time to perform error scrubbing and locked updates.

Bank ordering is enforced by the BOSS. A multiprocessor board is given a grant for a particular bank and must wait for the correct bank to come up in the interleaving sequence. A processor board which follows the standard sequence thus does not have to wait. Even if the standard sequence is not followed, each multiprocessor board is guaranteed access to the appropriate memory bank at least once every frame.

Upon receiving a read function signal from a processor, a memory board can respond in a variety of ways. Two response lines running from memory to processor encode responses such as "busy", "transfer accepted", "non-present memory", and "unsupported function". A third response line indicates "uncorrectable data" error.

Memory interleave sequencing is determined before the BOSS allows any reads or writes. Memory interleaving is optimized by arranging data addresses so as to maximize the utilization of memory.

To refresh the dynamic RAMs of the global memory, additional cycles not used by the multiprocessor boards are needed, so three refresh cycles are inserted after every 128 granted cycles. This refreshes three of the eight banks approximately each five microseconds, which is close to the optimum rate, while allowing each microprocessor on the boards one access to each bank.

To maximize global bus utilization and to provide data coherency, the BOSS board 12 sequences bus grants according to a grant list providing each user processor access to successive memory banks on successive bus accesses. During any single clock period on the global bus, one of the memory banks is guaranteed to be available for reading or writing. While many banks may in fact be available, the system enforces a rule that on any given bus cycle, only a specific bank may be accessed, insuring predictable performance. (See the Appendix for an example of a grant list.)

The grant list for a system with the maximum number of memory boards and processor boards gives each user processor access to one memory bank. Thus, the grant list must be repeated eight times to give each user processor access to each memory bank. The length of the grant list multiplied by the number of times it must be repeated to give each user processor access to each bank is called the grant list epsilon. Epsilon is the minimum number of bus cycles in the read or write phase of a frame. The epsilon insures that each phase begins on the same bank for each user processor and that each user processor gets an access to every bank. If each user processor is partitioned into virtual processors, as in the present embodiment, herein referred to as cells, epsilon must be multiplied by the number of cells per user processor to insure that every cell gets an access to each memory bank.

Any two user processors can not access the same bank at the same time. For example, if user processor A reads its first data from bank 0 at the beginning of a frame, user processor B can not read its first data from bank 0 because bank 0 is already busy. Instead, user processor B reads data from bank 1, user processor C reads from bank 2, and so on. To ensure that each user processor gets a turn at every bank, the grant list is incrementally rotated each time it is repeated.

To insure data coherency, each cell must read from global memory in ascending global address order, write to global memory in ascending order, and never miss an opportunity to read or write. Also, each user processor must initiate reading and writing at the same memory bank.

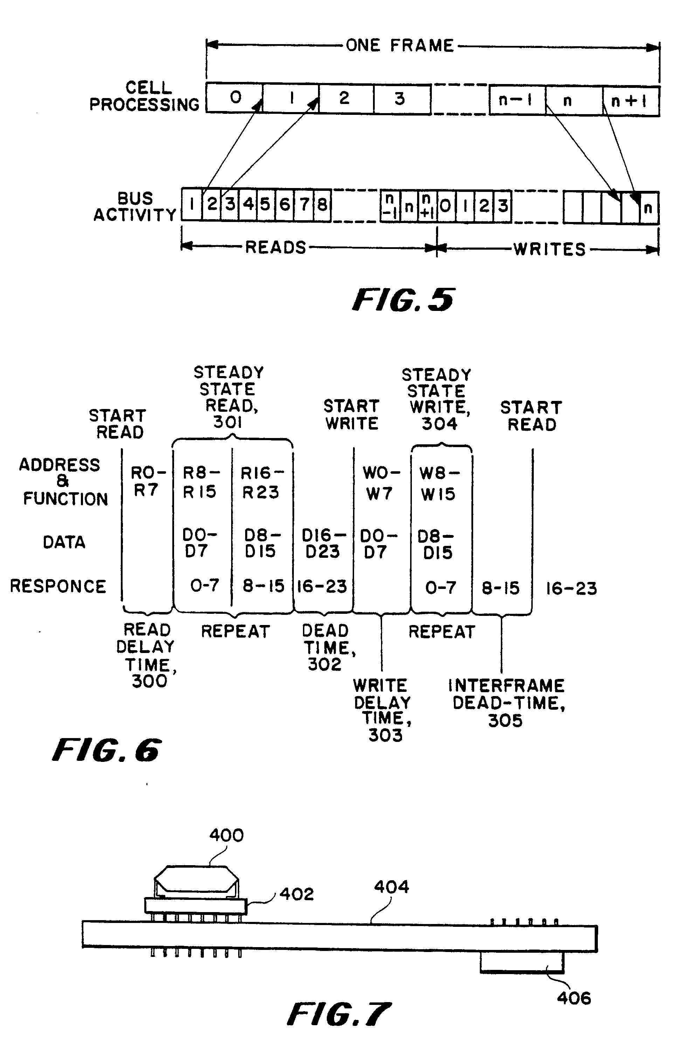

Fig. 5 illustrates how bus activity associated with reading from and writing to global memory is coordinated with processing activity. Each cell must see the same data in global memory within each frame. When a cell computes a new value, the new value is stored in a separate local memory buffer so that cells reading the variable from global memory will not see the new value until the next frame.

Processing always starts with cell 0. Each numbered tile in the upper row represents the time a user processor dedicates to processing the data stored in local memory associated with each cell. Each tile in the lower row represents bus activity corresponding to reads from and writes to global memory, as allocated by the BOSS board 12.

While cell 0 is processing, data to be processed by cells 1, 2, and 3 are read from global memory into the local memory of their respective user processors, which may be the same processor. While cell 1 is processing, data to be processed by cells 4, 5, and 6 are read from global memory into the local memory of their respective user processors, and so on for the rest of the cells up to n, the maximum number of cells. Each cell's data is ready by the time that cell begins processing, except for cell zero.

After all the cell's data are read from global memory, the BOSS initiates a transition from the read to the write mode. Starting again with cell 0, data from the local memory associated with each cell is written to global memory. The time spent reading from global memory plus the time spent writing to global memory for each cell is equal to the cell's processing time. Therefore, the results of cell processing are always ready by the time it needs to write them to global memory, except for the very last cell, whose results cannot be written to global memory until the next frame. Thus, there is a cell (0) at the beginning of each frame which cannot read from global memory during that frame, and there is a cell (n + 1) at the end of a frame which cannot write to global memory during that frame.

In a preferred embodiment, 128 cells are supported, numbered 1 to 128, and there are two additional cells numbered 0 and 129 which are used for debugging and other system functions.

The period of the frame is set so that it has a duration of 1/60th of a second, or about 16 milliseconds. There are therefore about 400,000 bus cycles in one frame. These bus cycles are equally divided among the 128 processors, resulting in 3,120 memory reads or writes for each processor per frame. These 3,120 reads and writes can be shared among the 128 processing cells, so that each cell can have 24 bus cycles per frame. Since four bytes can be transferred on each bus cycle, each cell is able to import or export a total of 96 bytes per frame.

Each cell has a guaranteed number of reads before processing and a guaranteed number of writes after processing, during each frame. The system is synchronized so that all cells appear to read at the start of a frame and write at the end of the frame.

Referring again to Fig. 1A, the I/O boards 18 and 22 function as dual-port global memory boards which contain high-speed parallel interfaces to the external devices 16 and 20, respectively. When data is passed from an external device to the global memory on an I/O board, it becomes immediately available to all of the processors in the system via the high-speed global bus 24. The I/O boards 18, 22 are directly connected to their respective external devices, and are each managed by a separate on-board I/O processor without requiring the use of cycles from either the global bus 24 or a processor connected to the global bus 24.

The work station 10 loads programs into the system 8 through the I/O portion of the BOSS board 12 via the high speed parallel bus 14. The host computer 16 provides data to and stores data from the system 8 through I/O board 18 coupled by parallel bus 15. Using an I/O board as a buffer, and under control of the BOSS board 12, the host computer 16 can load a program into the system, write data to the global memory and retrieve results therefrom, and can copy programs out of the global memory and store them for later execution. The graphics display 20 is coupled to the system 8 by means of I/O board 22 and bus 17, and permits high resolution graphics to be presented by the system.

Referring to Fig. 1B, to accomplish data transfer, the computer system employs a wide high-speed global bus 24 having, in a preferred embodiment, forty address lines, thirty-two data lines, two utility lines, three response lines, three function lines and six grant lines.

The global bus 24 is preferably designed as a flat backplane whose length is limited to the length of conductors that can be driven reliably at the full bus speed, which in the present embodiment is 36 inches.

In order to minimize the propagation effects of a typically three foot long backplane, the global bus 24 uses two clock signals RCK and LCK, one propagating in each direction, as shown in Fig. 1A. Backplanes of length greater than three feet are also contemplated, and would also benefit from the use of two clock signals. There is only one clock generator, which resides on the BOSS board 12.

The right-traveling clock signal (RCK) is driven by a driver such as a DS3893 "Turbotransceiver" on the BOSS board which is plugged into the highest numbered slot at the left end of the backplane. The left-traveling clock signal (LCK) is driven by a repeater 28 mounted at the right end of the backplane. The two clock signals have a known phase relationship because the returning clock signal is generated by buffering the outgoing clock signal (LCK) and then sending it back as the returning clock signal (RCK).

The right-going clock signal clocks right-going (read) data signals, and the left-going clock signal clocks left-going (write) data signals. Signal directions are determined a priori because all processor boards are plugged into the right side of the bus, while BOSS, memory, and I/O boards are plugged into the left. For example, referring to Fig. 1B, grant data always travels left-to-right, and address data always travels right-to-left. Using clock signals which travel with the data signals allows data rates as fast as those of an asynchronous bus, while enjoying the arbitration switching rate of a synchronous bus.

Each board that is plugged into the backplane receives TTL level clock signals via a clock signal receiver such as a MC10H125 receiver. Clock signal lines use differential ECL to reduce skew at each receiver. All other signals (e.g., data, address, etc.) that are synchronized to the 40 nanosecond clock signal are driven and received by DS3893 BTL "Turbotransceivers" to meet the timing requirements. These transceivers provide each board with a TTL level interface to the bus signals with separate tri-state receiver outputs and driver inputs. All drivers are preferably inserted in sockets that are directly mounted on the backplane to reduce stub length and thereby reduce reflections and capacitive loading. The backplane can be properly terminated irrespective of the number of boards that are plugged therein.

Referring to Fig. 7, a preferred means for reducing stub lengths is to surface mount a device 400 to a pin grid array (PGA) carrier 402 that is mounted on the backplane 404. A daughter board can connect to the backplane 404 via a connector 406.

Bussed signals are carried by lines that all reside in one buried layer that is sandwiched between two ground planes. These lines are driven by the BTL devices, and have a controlled impedance and are terminated with the impedance at each end of the backplane. Slower signals are interfaced with BTL drivers/receivers on the daughter boards. Trapezoidal drivers with limited slew rates are used to reduce the effects of the longer stubs on these lines. Stub lengths should still be kept to a minimum.

Each set of four signals shares both an active high driver enable and active low receiver enable. Most boards will ground (activate) all the receive enables, but they are wired separately for flexibility of design.

Using a fixed bus allocation scheme minimizes the number of wires and bus drivers needed to control global bus access, and reduces backplane and global bus interface complexity.

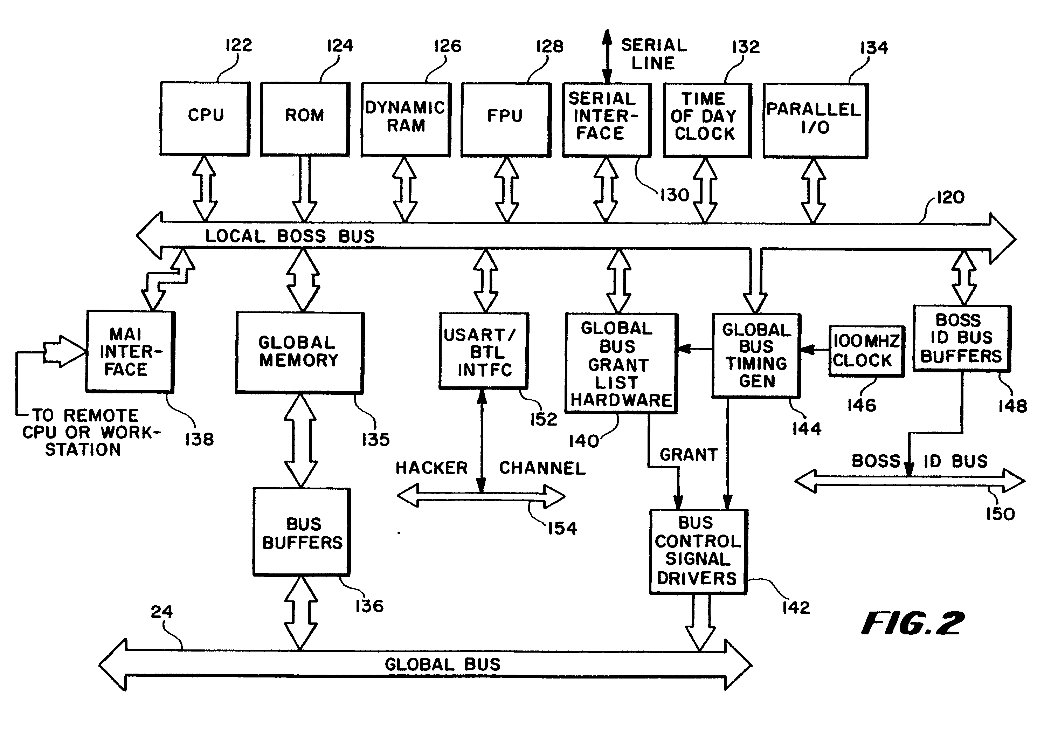

The BOSS board 12 is shown in Fig. 2. A local BOSS bus 120 is coupled to a CPU 122, a ROM 124, a dynamic RAM 126 and a floating point unit (FPU) 128. The BOSS bus 120 is also coupled to a serial interface 130, a time of day clock 132 and a parallel I/O 134. A global memory 135, which is part of global memory for the system, is coupled to the BOSS bus 120 and is also coupled via buffers 136 to the global bus 24. The global memory 135 is also coupled via the local BOSS buss 120 and a memory access interface (MAI) 138 by which the system can be connected to a remote processor or workstation for remote access to the memory. The global bus grant list hardware 140 is coupled to the bus 120 and bus control signal drivers 142, providing grants to the global bus 24 via the control signal drivers 142. A global bus timing generator 144 provides timing signals to units 140 and 142 in accordance with a 100 MHZ clock 146.

To provide programmer access to the CPU 122 and to associated memories for debugging purposes, a BOSS ID bus 150 and a hacker (debugging) channel 154 are typically provided on the backplane to which the BOSS board is connected. Identification of the boards is provided by identification data conveyed via BOSS board I.D. buffers 148 to the BOSS ID bus 150. A serial USART/BTL interface 152 couples the bus 120 to the hacker channel 154.

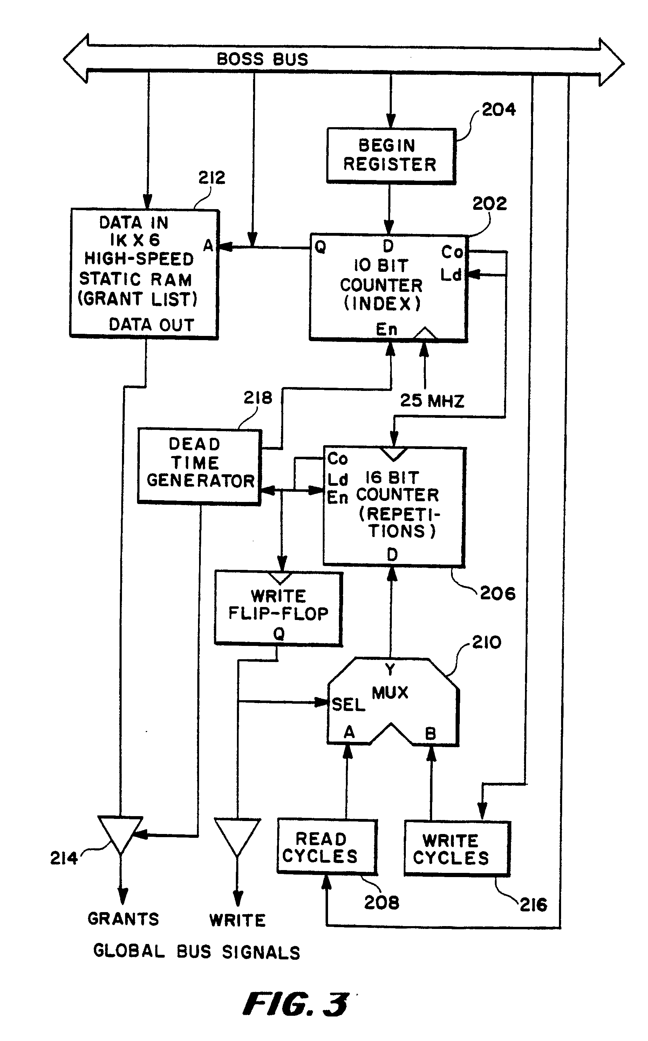

The order of bus grants is controlled by the global bus grant list hardware 140 on the BOSS board 12. Referring to Fig. 3, the grant list is generated by software while the bus is idle, and is stored in a high-speed static RAM 212. The grant list identifies the sequence in which processor boards will be granted access to the global bus 24 so that they may read from and write to global memory. Some bus cycles are granted to memory for refresh.

Each pass through the grant list allocates one bus cycle to each of the 128 user processors in turn. In the present embodiment, to give the 128 user processors one 40-nanosecond bus cycle requires 5,120 nanoseconds, or 5.12 microseconds. In the preferred embodiment, each user processor can transfer 4 bytes per bus cycle, permitting an overall gross data transfer rate per processor of about 780,000 bytes per second.

The grant list is transmitted on the bus 24 for some integral number of iterations while the bus 24 is in read mode, under control of software running on the BOSS board 12 using a repetitions counter 206 and a read cycles register 208. The Read Cycles 208 and Write Cycles 216 registers contain the number of iterations through the grant list for the read and write phases of the bus frame. Then, this process is repeated while the bus 24 is in write mode using a write cycles register 216.

The grant list hardware 140 contains a data structure that is held in a RAM 212 that is supported by several counters 202, 206 and control hardware. Each entry in the grant list corresponds to a single bus cycle. (See Appendix for an example of a grant list.) The entry is placed on the grant lines of the global bus 24, and allocates the cycle to a particular multiprocessor board, a memory bank for refresh, or to the BOSS board 12.

There are up to forty slots in the global bus and sixty-four possible values in each entry of the grant list. The slots are numbered 0 to 39. The following table shows the grant list values for the various uses:

Table 1

| Allocate To | Use grant list entry |
|---|---|
| Multiprocessor | slot ID (0 - 39) |
| memory for refresh | 62 |
| bus no-op | 63 |
| BOSS usage | 63 |

The grant list is placed in the RAM 212 so that it ends at the end of the RAM. A Begin Register 204 is set up to contain the index of the first element of the grant list.

The following is a description of grant list operation in steady state. Referring to Fig. 3, a frame begins with the 10-bit index counter 202 loaded from the Begin Register 204, the 16-bit repetitions counter 206 loaded from the Read Cycles register 208 via MUX 210, and the global bus in Read mode. On the first cycle, the entry in the grant list in RAM 212 at the location indexed by the index counter 202 (i.e., the value of the Begin Register 204) is placed on the global bus grant lines 214. Each global bus cycle causes the index counter 202 to be incremented, so subsequent entries of the grant list 212 are placed on the global bus grant lines 214 on subsequent global bus cycles.

This process continues until the index counter 202 reaches the end of the grant list RAM 212. Then, the index counter 202 is reloaded from the Begin Register 204, and the repetitions counter 206 is decremented.

In this way, the grant list 212 is repeated continuously on the global bus grant lines 214.

When the repetitions counter 206 reaches zero, the following events occur. The index counter 202 is held (it has just been loaded with data from the Begin Register 204), and the repetitions counter 206 is loaded with data from the Write Cycles register 216. The Dead Time Generator 218 places global bus no-ops on the grant lines 214 for the next eight global bus cycles to complete the last eight read operations. The global bus is then placed in Write mode, and the index counter 202 is enabled by the Dead Time Generator 218.

The write phase proceeds placing the entries of the grant list stored in the RAM 212 onto the global bus grant lines 214, as in Read mode. When the repetitions counter 206 reaches zero, the index counter 202 is held (it has just been loaded with the contents of the Begin Register 204), and the repetitions counter 206 is loaded from the Read Cycles resister 208. The Dead Time Generator 218 places global bus refreshes on the grant lines 214 for the next eight global bus cycles to turn around the global bus. The global bus is placed in Read mode, and the index counter 202 is enabled. The entire process (called a frame) is repeated indefinitely.

In short, a frame is the process of iterating through the grant list for reading and then for writing. During each frame, each user processor is given enough global memory read accesses to get the data it needs, then enough global write accesses to write its results in global memory before the start of the next frame. This process is initiated by software and is then hardware driven. The frame is repeated indefinitely without further intervention by the software.

Referring to Fig. 6, read cycles consist of address and data segments. Write cycles transfer addresses and data on the bus all during one cycle. When the bus switches from write to read mode during a read delay-time phase 300, the BOSS delays grants for 8 cycles while the pipeline fills. Once the pipeline is filled, data transfers occur on each clock cycle during the steady-state read phase 301. When the bus switches from read mode to write mode, the BOSS must delay grants for 8 cycles while the pipeline empties during a dead-time phase 302. The pipeline again fills during a write delay time phase 303, whereupon a steady-state write phase 304 begins. A software controllable interframe dead-time 305 must elapse before then next read cycle begins. As mentioned above, this dead-time may be synchronized to external devices.

The global bus assumes that all transactions are memory update cycles or DMA (direct memory access) transfers between the local memory of a microprocessor and the global memory.

All global bus accesses are 32 bits in width. ALU functions on the global memory boards and I/O boards will allow processors to update partial words using AND, OR and Exclusive OR logic. This allows a global memory word to be divided and distributed among a plurality of processors, each processor updating its portion of the word, independently of other portions. This is useful for arrays of bytes as well as string data or video pixel arrays. The ALU can also implement read-with- increment or read-with-decrement for "take-a-number" style resource allocation.

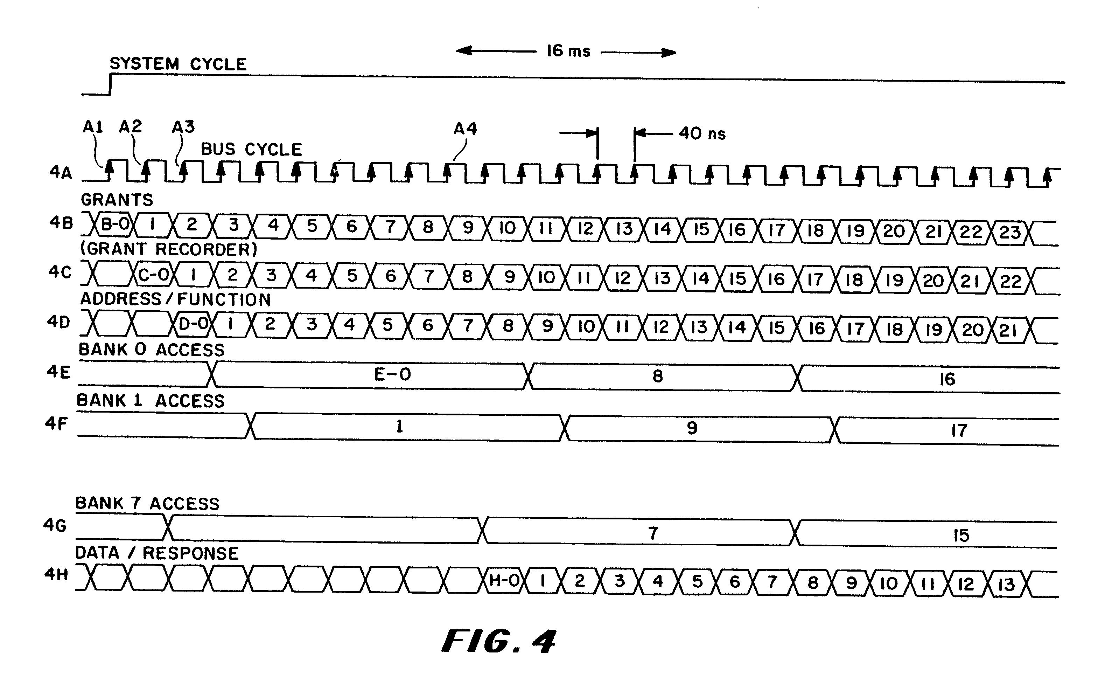

Figs. 4A through 4H are timing diagrams showing reading and writing operations for the global memory. Each processor is given sufficient access to the global bus 24 to write the results of its previous cycle to global memory and to read data from global memory for its next cycle. Because the bus 24 is fast, each processor must set up its data transfer before it has bus access, and to optimize efficiency, a processor which is not ready to put data on the bus 24 at the proper time loses its turn.

Fig. 4A shows the global bus cycle where each cycle is about 40 nanoseconds. Data transfer to or from a processor takes three bus cycles. At a first cycle rising edge A1, processor number 0 is granted a bus cycle by the BOSS board 12, and receives a grant during cycle B-0, shown in Fig. 4B. Global bus input signals are strobed into registers on each processor board at the rising edge of the bus clock, without any gating or decoding.

At the rising edge A2 of the second bus cycle, the processor receives the actual grant during period C-0 of Fig. 4C, but it still needs time to compare the grant to its own slot, comparing the allocated bank to the needed bank, comparing the state of write/read register to the allocated transfer direction, so that it can use the cycle. If verification is correct, at the rising edge A3, the processor caries out transactions during time D0, i.e., read or write. The process is repeated one cycle later for the next processor in the sequence. By overlapping the three phases of the transfer cycle, note that the computer system can start a new bus cycle every 40 nanoseconds, even though the individual processors cannot operate that fast.

A write of data from the local memory of a processor to global memory takes one bus cycle, during which time data is transferred from high speed registers associated with the processor to high speed registers on the appropriate global memory board. The data is then written from the fast registers on the memory board into the appropriate memory location during the subsequent seven bus cycles.

A read of data from global memory is split into address and data sections and thus transfers data to a processor during the opposite halves of two different bus cycles. Since memory cannot be read in a single bus cycle, data is returned eight bus cycles later. As shown in Fig. 4, during the first bus cycle, the address of the global memory word is transferred from high speed registers associated with the processor to fast registers on the memory board during cycle D-0. The memory obtains the data during time period E-0, which is eight cycles long. When the memory finishes cycling and the data becomes available, another bus cycle A4 transfers the data from the fast registers in the memory board to the fast registers associated with the processors, during period H-0.

To assure that all global data is updated coherently, the processors operate synchronously so that no processor starts a new timing frame until all of the other processors have finished their frame. A multi-word write to global memory from a single user processor must appear to be atomic, and look as though the user processor performed the write operation before any other user processor can access the data. Any variable requiring more than a one word transfer must be updated without skipping an available cycle. A multi-word variable must be updated in specified order using every cycle available for the purpose. All data may be transferred using multiple reads during a single bus cycle. Each frame allows every processor to read from a single location in memory and allows every processors to write to a single location in memory.

The bus of the invention is applicable to multiprocessor systems such as that disclosed in copending application Serial No. 07/276,413, filed December 23, 1988, where each user processor is divided into a plurality of processor cells. The bus of the invention provides guaranteed access to a global memory by each cell.

Other modifications and implementations will occur to those skilled in the art without departing from the spirit and the scope of the invention as claimed. Accordingly, the above description is not intended to limit the invention except as indicated in the following claims.

## Glossary

Arbitration - The resolution of ownership disputes among several data devices requesting access to a bus.

Bank - A group of memory chips and associated logic which cycle in tandem.

BOSS board - Control logic that schedules all accesses to the Bus. A grant list stored in memory on the BOSS board determines the order in which user processors are allocated bus cycles during each frame. The BOSS board also includes a parallel interface that shares some of global memory with an attached workstation.

BTL -Backplane Transceiver Logic. A bus-interface logic-family that employs open collector outputs with low voltage swings and precision reference adapted to drive low impedance signal lines without reflections and without crosstalk.

Bus - A large number of conductors that cycle with a period of 40 nanoseconds and transfer 32 bit words of data to and from the user processors and global memory. The term 'bus' may refer only to the conductors which actually carry the data, but more typically refers to the bus sub-system, which in the instant invention includes the conductors, the BOSS board that orchestrates access to the conductors, and associated hardware and software. The bus system is the primary subject of this patent application.

Cell - The minimum allocatable unit of hardware resources. A typical cell has 16 words of memory for data read from global memory, and 8 words of memory for data to be written to global memory, and runs about 350 instructions during every frame.

Cell time - The portion of a frame allotted to a cell for processing. Each frame comprises a fixed number of cell times.

Cycle - A unit of time during which a device completes a repeatable operation. The duration of a cycle depends on the operation.

Data coherence - A transfer of data to a memory is said to be coherent only if partial results cannot be read from the memory.

Dead time - Time inserted by the BOSS board between a read phase and a write phase. Dead time is used to let bus lines settle before the direction of data flow reverses, and to synchronize the computer system with external signals.

Frame - A period of time during which every cell in every user processor is given a chance to read data from global memory, run any code in the cell, and write data to global memory. In a preferred embodiment, the frame cycles at 60 Hz, but can be set up to run at different rates.

Global memory - Memory accessible to all user processors in the computer system. During each frame, data are read from global memory, and processed, the new values being written back to global memory.

Grant - Preallocated access to the bus for reading from or writing to the global memory. Only one bus cycle is allocated per grant, allowing access to one memory bank.

Grant list - Hardware registers on the BOSS board containing the schedule of bus grants.

Interleave - A method of synchronizing access to a series of memory banks so that they can be accessed more frequently than the cycle time of the banks' memory chips. If there are N banks, the beginning of each bank's cycle is delayed by the period of the memory cycle divided by N with respect to the previous one. Thus, one bank is available each 1/Nth of the period of the memory cycle.

Local memory - Banks of memory which are dedicated to local processors. Processors store programs and intermediate data in local memory, transferring only final results to global memory.

Phase - A period during which data on the bus is traveling in a particular direction. Each frame is composed of one read phase and one write phase. A phase is typically very long compared to the period of a bus cycle.

Real-time - Either fast enough with respect to external events so that computer speed is not a problem, or predictable such that the interval between receiving input and generating appropriate output does not vary with the computer load.

Slot - A physical connector on the Bus which may hold a board. (BOSS, memory, multi-processor, or I/O)

Turbotransceiver - A high-speed backplane signal transceiver designed for Futurebus. See BTL. Turbotransceiver is a trademark of National Semiconductor Corporation.

User processor - A user processor reads data from global memory, performs computations on the data, and then writes the results to global memory. User processors reside on a processor board.

## Claims

1. A bus for a computer system adapted to provide efficient communication among a plurality of data devices coupled to said bus comprising:
means for providing pre-allocated bus access to each of said data devices coupled to said bus, wherein said bus cannot be seized by any of said data devices; and
means for insuring that said bus is always in a read or write mode for a long time relative to a cycle time of said bus.

2. The bus of claim 1 including a backplane and wherein said means for providing pre-allocated bus access is a bus allocator circuit in communicating relationship with said backplane, adapted to implement a high-speed, rotating bus allocation scheme that is independent of the number of data devices in communicating relationship with said backplane, wherein only one bus cycle is allocated to each of said data devices.

3. The bus of claim 1, wherein said data devices include a plurality of processors and said processors collectively communicate with said bus at full bus bandwidth.

4. The bus of claim 3, wherein said bus allocator circuit comprises:
bus control signal drivers in communicating relationship with said bus and adapted to provide signals to said bus;
bus grant list hardware adapted to provide grants in a particular order to said bus, in cooperation with said bus control signal drivers;
means for generating bus timing signals, in communicating relationship with said bus grant list hardware and said bus control signal drivers; and
means for generating clock signals, in communicating relationship with said bus timing generator.

5. The bus of claim 4, wherein said clock signals include first and second clock signals travelling in opposite directions to control respective data signals.

6. The bus of claim 5, wherein one of said clock signals is reflected at an end of said bus to produce the other of said clock signals in a known phase relationship with said one clock signal, resulting in said signals travelling in opposite directions.

7. A bus for a computer system having a plurality of data devices in communication via the bus, comprising:
a backplane to which each of the data devices can be selectively connected;
clock means for propagating clock signals along the backplane, said clock means including:
means for providing a first clock signal travelling along the backplane in a first direction;
means for providing a second clock signal travelling along the backplane in a second direction opposite to the first direction.

8. The invention of claim 7, wherein the first and second clock signals control data signals travelling in the same respective directions.

9. The invention of claim 7, wherein the second clock signal is provided by reflection of the first clock signal.

10. The invention of claim 9, wherein the second clock signal is in predetermined phase-shifted relationship to the first clock signal.

11. The invention of claim 7, wherein the means for providing the first clock signal includes clock generating means coupled to one end of the backplane, and wherein the means for providing the second clock signals includes clock generating means coupled to the opposite end of the backplane.

12. The invention of claim 11, wherein the clock generating means at the opposite end of the backplane includes means for transmitting the second clock signal in predetermined relationship to the received first clock signal.

13. A synchronous bus for a computer system providing efficient communication along a plurality of data devices coupled to a bus comprising:

timing means for providing bus frames during each of which there is a write only portion and a read only portion;

means for providing during each bus frame a plurality of time slots each allocated to a respective data device.

14. The invention of claim 13 including:

one or more input/output boards;

one or more processor boards;

a backplane to which each of the boards is connected;

a bus allocation board connected to the backplane including means for providing bus grants to each of the data devices.

15. The invention of claim 14, wherein the bus allocation board includes:

means operative in response to the clock signal for generating bus timing signals;

means operative in response to the timing signals to provide bus grants in a predetermined order to the bus.

16. The invention of claim 15, wherein the bus grant means includes means for storing a representation of the bus grants and providing grant output signals representative of respective grants; and

signal driver means operative in response to the grant output signals for providing bus control signals to the bus representative of the bus grants.

17. The invention of claim 14, wherein the backplane has a plurality of connectors into which respective data devices can be plugged and unplugged; and

one or more connectors directly mounted on the backplane and operative to retain bus driving circuitry.

18. The invention of claim 17, wherein the backplane includes a multi-layer printed circuit board having a first ground plane, a second ground plane and a signal layer interposed between the first and second ground plane;

the bus signals being carried by signal lines in the interposed layer.

19. A synchronous bus for a computer system providing efficient communication among a plurality of data devices coupled to the bus comprising:

timing means for providing bus frames during each of which there is a write only portion and a read only portion;

means for providing during each bus frame a plurality of time slots each allocated to a respective data device;

a signal transmission path to which the data devices are coupled;

the timing means including means for propagating first and second clock signals in respective opposite directions along the signal transmission path;

during a write only portion of a bus frame, data signals travel along the transmission path in a first direction in association with the clock signals propagating in the same direction;

during a read only portion of a bus frame, data signals travel along the transmission path in a second direction in association with the clock signals propagating in that same direction.

20. The invention of claim 19 including means for providing a period of time between the write only portion and the read only portion of each bus frame during which no bus access to the data devices is initiated.

21. The invention of claim 20 including means operative at the end of a bus frame to selectively adjust the frame rate to permit synchronization of the bus with an external device.

## FIG.1A

WRITE DATA ——— ——— READ DATA

←—— 32 DATA LINES ——→

←—— 40 ADDRESS LINES ———

——— 6 GRANT LINES ——→

←—— 3 FUNCTION LINES ———

——— 3 RESPONSE LINES ——→

←—— 2 UTILITY LINES ——→

## FIG.1B

EP 0 397 302 A2

EP 0 397 302 A2

FIG.2

**BOSS BUS**

BEGIN REGISTER — 204

DATA IN IK X 6 HIGH-SPEED STATIC RAM (GRANT LIST) — 212
DATA OUT

10 BIT COUNTER (INDEX) — 202
Q D Co Ld En

25 MHZ

DEAD TIME GENERATOR — 218

16 BIT COUNTER (REPETI-TIONS) — 206
Co Ld En D

WRITE FLIP-FLOP Q

MUX — 210
SEL Y A B

READ CYCLES — 208

WRITE CYCLES — 216

GRANTS — 214

WRITE

GLOBAL BUS SIGNALS

**FIG. 3**

**FIG. 4**

FIG. 5

FIG. 6

FIG. 7